# EUROPÄISCHE PATENTSCHRIFT

(11) **EP 3 263 850 B1**
(45) Veröffentlichungstag und Bekanntmachung des Hinweises auf die Patenterteilung: **10.07.2019**
(21) Anmeldenummer: 17171747.3
(22) Anmeldetag: 18.05.2017
(51) Int. Cl.: F01D 25/18, F01D 25/20, F01M 1/08, F01M 11/00, F02C 7/06, F02K 3/06

(54) **TANKVORRICHTUNG EINES ÖLKREISLAUFES EINES FLUGTRIEBWERKS MIT EINER EINRICHTUNG ZUM EINLEITEN VON ÖL**
TANK DEVICE OF AN OIL CIRCUIT OF AN AIRCRAFT ENGINE WITH A DEVICE FOR FEEDING IN OIL
DISPOSITIF DE RÉSERVOIR D'UN CIRCUIT D'HUILE D'UN GROUPE MOTOPROPULSEUR DOTÉ D'UN DISPOSITIF DE CONDUITE D'HUILE

(30) Priorität: 28.06.2016 DE 102016111838
(43) Veröffentlichungstag der Anmeldung: 03.01.2018
(73) Patentinhaber: Rolls-Royce Deutschland Ltd & Co KG, 15827 Blankenfelde-Mahlow (DE)
(72) Erfinder: BEIER, Jürgen, 15732 Schulzendorf (DE)
(74) Vertreter: Schmidt, Martin Michael

(56) Entgegenhaltungen:
- DE-A1- 3 137 947
- DE-A1-102014 113 128
- DE-A1-102014 113 132
- FR-A1- 2 638 782
- US-A1- 2011 314 830

## Beschreibung

Die Erfindung betrifft eine Tankvorrichtung eines Ölkreislaufes eines Flugtriebwerks zur Bevorratung von Öl mit einem von einer Wandung begrenzten Innenraum und mit wenigstens einer Einrichtung zum Einleiten von Öl in den Innenraum gemäß der im Oberbegriff des Patentanspruches 1 definierten Art.

Flugtriebwerke weisen einen Ölkreislauf auf, dessen Öl insbesondere zur Schmierung und Kühlung von Rotorlagern und Zahnrädern und Lagern der Getriebe des Flugtriebwerks eingesetzt wird. Zu dem Ölkreislauf gehören insbesondere eine Tankvorrichtung, eine Druckpumpe, Ölrückführpumpen, Filter, ein Ölkühler und ein Entlüftungssystem. Das Öl wird im Ölkreislauf mittels der Druckpumpe von der Tankvorrichtung über Versorgungs- oder Druckölleitungen und einen Druckfilter zu den mit Öl zu beaufschlagenden Bereichen des Triebwerks gefördert. Des Weiteren wird das Öl des Ölkreislaufs über insbesondere mehrere Ölrückführpumpen aus den jeweiligen Bereichen des Triebwerks über eine Filtereinrichtung und einen Ölkühler zurück zu der Tankvorrichtung gepumpt. Mittels des Entlüftungssystems wird im Betrieb des Flugtriebwerks insbesondere im Bereich von Lagerkammern die Ölbeladung von im Betrieb eines Flugtriebwerks entstehendem Luft-Öl-Gemisch reduziert und die gereinigte Luft an die Umgebung abgeführt, während das aus dem Luft-Öl-Gemisch abgeschiedene Öl im Ölkreislauf verbleibt.

Eine Tankvorrichtung eines Ölkreislaufs zur Bevorratung und Lagerung von Öl ist in der DE 10 2014 113 128 A1 näher beschrieben. Eine Wandung der Tankvorrichtung begrenzt dabei einen Innenraum der Tankvorrichtung. Über eine Einlasseinrichtung wird der Tankvorrichtung ein Luft-Öl-Volumenstrom bzw. sogenannte ölhaltige Verbrauchsluft zugeführt. Mittels eines Ölabscheiders wird aus dem Luft-Öl-Volumenstrom Öl abgeschieden, wobei der Luft-Öl-Volumenstrom mit geringerer Ölbeladung anschließend einer Leitung zugeführt wird. Mittels einer Öldüse wird der in der Leitung geführte Luft-Öl-Volumenstrom mit Öl beaufschlagt, um eine weitere Reduzierung der Ölbeladung des Luft-Öl-Volumenstroms zu erzielen.

Die Tankvorrichtung ist insgesamt hinsichtlich einer im Betrieb eines Flugtriebwerks maximal benötigten Ölmenge, einer vom Ölkreislauf nicht verwendbaren zusätzlichen Ölmenge und eines erforderlichen Expansionsraums auszulegen, der aus Sicherheitsgründen zur Verhinderung eines unzulässigen Überdrucks in der Tankvorrichtung vorzusehen ist und in dem kein Öl gelagert wird. Aus Gewichtsgründen wird versucht, die Tankvorrichtung mit möglichst kleinen Abmessungen und mit geringen Wandstärken auszuführen. Da an die Tankvorrichtung wiederum hohe Anforderungen hinsichtlich der Feuerfestigkeit gestellt werden, sind Wandungsbereiche der Tankvorrichtung, die im Betrieb hohen thermischen Einflüssen ausgesetzt sind und gleichzeitig nicht ausreichend gekühlt werden, mit einer das Bauteilgewicht in unerwünschtem Umfang erhöhenden Wandstärke auszuführen. Einen solchen Wandungsbereich stellt unter anderem ein in Einbaulage der Tankvorrichtung oberer Bereich der Tankvorrichtung dar, der über wesentliche Betriebsbereiche eines Flugtriebwerkes nicht mit in der Tankvorrichtung gespeichertem Öl beaufschlagt wird. Eine unzureichende Kühlung weiterer Wandungsbereiche der Tankvorrichtung resultiert u. a. auch daraus, dass im Betrieb des Flugtriebwerks ein Ölvolumen in der Tankvorrichtung gegenüber einem mit einem maximalen Füllstand korrespondierenden Ölvolumen reduziert ist und die darüber liegenden Wandungsbereiche an das in der Tankvorrichtung gespeicherte Ölvolumen nur in geringem Umfang thermische Energie abgeben können. Aus diesem Grund werden sämtliche Wandungsbereiche der Tankvorrichtung oberhalb des sich im Betrieb minimal einstellenden Füllstands mit einer großen Wandstärke ausgeführt, was das Bauteilgewicht der Tankvorrichtung nachteilhafterweise erhöht.

Es ist Aufgabe der vorliegenden Erfindung, eine Tankvorrichtung der eingangs näher beschriebenen Art zu schaffen, die durch eine ausreichende Feuerfestigkeit und durch ein geringes Gewicht gekennzeichnet ist.

Erfindungsgemäß wird diese Aufgabe mit einer Tankvorrichtung mit den Merkmalen des Patentanspruches 1 gelöst.

Die erfindungsgemäße Tankvorrichtung eines Ölkreislaufs eines Flugtriebwerks zur Bevorratung von Öl in einem von einer Wandung begrenzten Innenraum ist mit wenigstens einer Einrichtung zum Einleiten von Öl in den Innenraum ausgeführt. Erfindungsgemäß ist mittels der Einrichtung zum Einleiten von Öl der Bereich der Wandung mit Öl beaufschlagbar, der oberhalb eines sich im Betrieb eines Flugtriebwerkes einstellenden minimalen Füllstandes angeordnet ist.

Über die Ausführung der erfindungsgemäßen Tankvorrichtung mit einer aktiven Kühlung ist mit geringem Aufwand auch bei im Betrieb des Flugtriebwerks niedrigem Ölstand in der Tankvorrichtung eine ausreichende Temperierung sämtlicher Wandungsbereiche der Tankvorrichtung durchführbar.

Entsprechend ist die erfindungsgemäße Tankvorrichtung im Vergleich zu aus dem Stand der Technik bekannten Tankvorrichtungen, die üblicherweise aus Aluminium ausgeführt sind und bei denen eine gewünscht hohe Feuerfestigkeit durch eine entsprechende Auslegung der Wandstärke der Tankvorrichtung erzielt wird, bei zumindest gleich hoher Feuerfestigkeit mit geringeren Wandstärken ausführbar und weist somit ein geringeres Gewicht auf. Dadurch ist die erfindungsgemäße Tankvorrichtung, die aus Aluminium und/oder Kompositmaterialien gefertigt sein kann, kostengünstiger herstellbar und ein Flugtriebwerk mit geringerem Kraftstoffverbrauch betreibbar.

Unter dem sich im Betrieb eines Flugtriebwerkes einstellenden minimalen Füllstand wird hier der minimale Füllstand verstanden, der sich im Normalbetrieb des Flugtriebwerks, d. h. bei durch die Erdanziehung dominierter, positiver auf das Öl wirkender Gewichtskraft verstanden.

Bei einer vorteilhaften Variante der erfindungsgemäßen Tankvorrichtung sind wenigstens 80 % einer dem Innenraum zugewandten Fläche eines Wandungsbereichs der Wandung mittels der Einrichtung zum Einleiten von Öl direkt mit Öl beaufschlagbar, wobei der Wandungsbereich im Einbauzustand der Tankvorrichtung eine in Hochrichtung obere Begrenzung des Innenraums bildet.

Dadurch wird auf konstruktiv einfache Art und Weise erreicht, dass im Betrieb durch das von der Einrichtung direkt auf den oberen Wandungsbereich eingebrachte Öl ein Ölfilm in dem oberen Wandungsbereich vorliegt, der durch die Schwerkraft entlang seitlicher, sich jeweils oberhalb des sich aktuell einstellenden Ölfüllstands befindenden Wandungsbereiche nach unten in Richtung des in der Tankvorrichtung gelagerten Öls strömt. Zusätzlich hierzu befinden sich im Betrieb des Flugtriebwerks auch Öltropfen in dem Innenraum der Tankvorrichtung, die dadurch entstehen, dass von der Einrichtung eingebrachtes Öl zum Teil von dem oberen Wandungsbereich abprallt. Turbulenzen und Verwirbelungen verteilen diese Öltropfen im Innenraum, die sich zumindest teilweise am Ölfilm im Bereich der Wandung der Tankvorrichtung abscheiden.

Die zumindest zu 80% mit Öl zu beaufschlagende und dem Innenraum zugewandte Fläche des Wandungsbereiches der Wandung entspricht einer Parallelprojektion der über die Einrichtung mit Öl zu beaufschlagenden Oberfläche des oberen Wandungsbereichs in Hochrichtung der Tankvorrichtung in Einbaulage und ist vorliegend definitionsgemäß gleich einer Querschnittsfläche der Tankvorrichtung auf Höhe eines maximalen Füllstandes der Tankvorrichtung.

Die von der Einrichtung mit Öl beaufschlagte Fläche umfasst vorzugsweise einen mittigen Bereich der oberen Begrenzung, der in der Regel einen in Einbauposition der Tankvorrichtung in Hochrichtung höchsten Punkt bzw. höchsten Bereich der Tankvorrichtung aufweist.

Bei einer vorteilhaften Ausführung einer erfindungsgemäßen Tankvorrichtung weist die Einrichtung Mittel zur Ausbildung eines Ölsprühkegels, insbesondere eine Düse, auf. Durch die direkte und/oder indirekte Beaufschlagung des oberen Wandungsbereichs mit Öltropfen des Ölsprühkegels bildet sich auf einer dem Innenraum der Tankvorrichtung zugewandten Fläche des oberen Wandungsbereichs ein Ölfilm bzw. vereinigen sich die Öltropfen des Ölsprühkegels mit einem bereits vorhandenen Ölfilm, der durch die Schwerkraft entlang seitlicher Wandungen in Richtung eines Ölreservoirs der Tankvorrichtung hinunterströmt und somit auch die seitlichen Wandungen mit Öl benetzt. Durch eine entsprechende Wahl einer Öltropfengröße des Ölsprühkegels und eines Drucks, mit dem das Öl von der Einrichtung auf den oberen Wandungsbereich gerichtet ist, kann eine Vereinigung der Öltropfen mit einem sich auf dem oberen Wandungsbereich befindlichen Ölfilm gefördert werden. Zudem kann je nach Wahl der Größe der Öltropfen und des gewählten Drucks ein Abprallen eines Teils des auf den oberen Wandungsbereich gezielten Öls von dem Wandungsbereich erzielt werden, wobei abprallende Öltropfen weitere Wandungsbereiche mit Öl benetzen können.

Das Mittel bzw. die Düse der Einrichtung ist vorzugsweise zur Ausbildung eines einen Öffnungswinkel kleiner als 180° aufweisenden Sprühkegels ausgeführt, wobei der im jeweiligen Anwendungsfall gewählte Öffnungswinkel in Abhängigkeit einer Position der Einrichtung und eines Abstandes der Einrichtung von dem oberen Wandungsbereich wählbar ist, so dass insbesondere wenigstens 80 % der Fläche des oberen Wandungsbereichs mit Öl beaufschlagbar ist.

Die Einrichtung zum Einleiten von Öl kann bei einer vorteilhaften Ausführung einer Tankvorrichtung nach der Erfindung Mittel zur Ausbildung eines Ölstrahls aufweisen, wobei mittels des Ölstrahls der obere Wandungsbereich direkt und/oder indirekt mit Öl beaufschlagbar ist. Eine Mittelachse des eine Auslassöffnung der Einrichtung aufweisenden Mittels kann dabei gegenüber der Querschnittsfläche des maximalen Füllstands einen spitzen Winkel von beispielsweise bis zu 30° aufweisen, so dass das im Wesentlichen parallel zu der Mittelachse der Auslassöffnung aus der Einrichtung austretende Öl zu einem großen Teil direkt, d. h. ohne von dem oberen Wandungsbereich abzuprallen, einen Ölfilm an dem Wandungsbereich bildet bzw. sich mit einem Ölfilm an dem Wandungsbereich vereinigt.

Bei einer vorteilhaften Ausführung einer erfindungsgemäßen Tankvorrichtung ist eine Ablenkeinrichtung vorgesehen, wobei die Einrichtung dazu ausgeführt ist, im Betrieb Öl auf die Ablenkeinrichtung zu richten. Durch das Vorsehen der Ablenkeinrichtung, auf die ein Ölstrahl oder ein Ölsprühkegel von der Einrichtung richtbar ist, kann eine Position der Einrichtung in dem Innenraum der Tankvorrichtung flexibel gewählt und dennoch sichergestellt werden, dass der obere Wandungsbereich in gewünschtem Umfang mit Öl beaufschlagt wird. Durch die Ablenkeinrichtung wird das von der Einrichtung auf die Ablenkeinrichtung auftreffende Öl abgelenkt und/oder umgelenkt, wobei je nach Anordnung der Ablenkeinrichtung und der Einrichtung zum Einleiten von Öl zueinander und der Formgebung der Ablenkeinrichtung auf konstruktiv einfache Weise der mit Öl beaufschlagte Flächenbereich des oberen Wandungsbereichs einstellbar ist.

Bei einer konstruktiv einfachen Ausführung der erfindungsgemäßen Tankvorrichtung weist die Ablenkeinrichtung wenigstens ein zumindest bereichsweise löffelförmiges und/oder kegelförmiges Ablenkelement auf. Über die löffel- und/oder kegelförmige Ausführung des Ablenkelements ist das von der Einrichtung in Form eines Ölsprühkegels oder eines Ölstrahls auf das Ablenkelement gerichtete Öl auf einfache Weise auf den oberen Wandungsbereich der Tankvorrichtung ablenkbar, wobei durch die Ablenkung im Bereich des Ablenkelements ein auf den oberen Wandungsbereich gerichteter Ölsprühkegel oder ein kegelförmiger Ölfilm bzw. ein vorhangähnlicher Ölkegel erzielbar ist.

Bei einer vorteilhaften Weiterbildung einer erfindungsgemäßen Tankvorrichtung weist die Ablenkeinrichtung ein erstes, mit einer in einem mittigen Bereich angeordneten Öffnung ausgeführtes Ablenkelement und wenigstens ein zweites Ablenkelement auf, wobei die Einrichtung zur direkten Beaufschlagung des zweiten Ablenkelements mit Öl durch die Öffnung des ersten Ablenkelements ausgeführt ist. Insbesondere ist von der Einrichtung hierbei ein Ölstrahl mit einem vorzugsweise kreisförmigen Querschnitt ausbildbar, der einen beispielsweise doppelt so großen Durchmesser wie die Öffnung des ersten Ablenkelements aufweist. Durch eine entsprechende Ausführung der Ablenkelemente beispielsweise mit sich voneinander unterscheidenden Öffnungswinkeln kann eine gewünschte Beaufschlagung des oberen Wandungsbereichs mit Öl auf einfache Weise sichergestellt werden.

Zur Verteilung des von der Einrichtung auf den Wandungsbereich gerichteten Öls insbesondere auf dem oberen Wandungsbereich, ist bei einer vorteilhaften Ausführung der Erfindung vorgesehen, dass im Bereich des oberen Wandungsbereichs wenigstens eine Umlenkeinrichtung zur Ablenkung des im Betrieb über die Einrichtung auf den oberen Wandungsbereich gerichteten Öls angeordnet ist. Die beispielsweise konusförmig ausgeführte Umlenkeinrichtung ist dabei insbesondere im Auftreffbereich des abgelenkten oder direkt auf den Wandungsbereich treffenden Öls mit dem oberen Wandungsbereich verbunden und weist einen je nach Anwendungsfall wählbaren Winkel gegenüber dem oberen Wandungsbereich der Tankvorrichtung auf, so dass durch eine Umlenkung des auf die Umlenkeinrichtung auftreffenden Öls im Betrieb des Flugtriebwerks auf dem oberen Wandungsbereich ein Ölfilm gebildet bzw. ein Ölfilm aufrechterhalten wird.

Bei einer vorteilhaften Ausführung einer erfindungsgemäßen Tankvorrichtung ist eine Auslasseinrichtung vorgesehen, die eine maximale Ölfüllstandshöhe der Tankvorrichtung festlegt, wobei ein beispielsweise düsenartig ausgeführter Auslassbereich der Einrichtung in Einbauposition der Tankvorrichtung in Hochrichtung oberhalb der Auslasseinrichtung angeordnet ist. Hierdurch wird auf einfache Weise sichergestellt, dass die Einrichtung zum Einleiten von Öl in jedem Betriebszustand bei sämtlichen möglichen Füllständen von Öl in der Tankvorrichtung den Wandungsbereich in gewünschtem Umfang mit Öl beaufschlagen kann.

Bei einer auf einfache Weise an den jeweils zur Verfügung stehenden Bauraum anpassbaren Ausführung der Tankvorrichtung weist eine Mittelachse eines Auslassbereichs der Einrichtung gegenüber einer in Einbauposition der Tankvorrichtung vertikal angeordneten Referenzachse bzw. einer Hochrichtung einen Winkel auf, der zwischen 0° und 180° liegt. Mittels der Einrichtung kann der die obere Begrenzung bildende Wandungsbereich somit auf einfache Weise sowohl in Richtung der Referenzachse gerade von unten als auch mit einem Winkel gegenüber der Referenzachse von seitlich direkt mit Öl beaufschlagt werden. Zudem ist der Auslassbereich der Einrichtung auch im Bereich des oberen Wandungsbereichs anordenbar, wobei Öl durch den Auslassbereich im Wesentlichen in Richtung der Referenzachse nach unten auf eine Ablenkeinrichtung einleitbar ist. Die Mittelachse des Auslassbereichs kann aber bei entsprechender Anordnung und Ausführung einer Ablenkeinrichtung grundsätzlich mit einem beliebigen Winkel gegenüber der Referenzachse orientiert sein.

Ein Auslassbereich der Einrichtung kann bezüglich einer Querschnittsfläche der Tankvorrichtung im Bereich der Auslasseinrichtung sowohl in einem mittigen Bereich der Tankvorrichtung als auch in einem Randbereich der Tankvorrichtung angeordnet sein, so dass die Anordnung der Einrichtung auf einfache Weise an die vorliegenden Bauraumverhältnisse anpassbar ist.

Um auf einfache Weise eine gewünschte Beaufschlagung der Fläche des oberen Wandungsbereichs mit Öl zu erzielen, können bei einer vorteilhaften Ausführung der erfindungsgemäßen Tankvorrichtung mehrere Einrichtungen zum Einleiten von Öl in den Innenraum der Tankvorrichtung vorgesehen sein, die jeweils in der oben näher beschriebenen Weise ausgeführt sein können. Es kann auch vorgesehen sein, dass die Einrichtungen derart ausgeführt sind, dass sie gemeinsam zur Beaufschlagung von insbesondere wenigstens 80 % der Fläche des oberen Wandungsbereichs mit Öl ausgeführt sind.

Weitere Vorteile und vorteilhafte Ausführungsformen der erfindungsgemäßen Tankvorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1a: eine stark schematisierte Längsschnittansicht eines Flugtriebwerkes mit einer im Bläsergehäuse angeordneten Nebenaggregategetriebeeinrichtung, in deren Bereich eine Tankvorrichtung eines Ölkreislaufes angeordnet ist;
- Fig. 1b: eine Fig. 1a entsprechende Darstellung eines Flugtriebwerkes mit im Bereich des Triebwerkskerns montierter Nebenaggregategetriebeeinrichtung mit einer Tankvorrichtung eines Ölkreislaufes;
- Fig. 2: eine vereinfachte Schnittdarstellung der Tankvorrichtung gemäß Fig. 1a und Fig. 1b in Alleinstellung, wobei in einem Innenraum der Tankvorrichtung eine Einrichtung zum Einleiten von Öl angeordnet ist;
- Fig. 3: eine stark vereinfachte Schnittdarstellung der Tankvorrichtung gemäß Fig. 2;
- Fig. 4: eine stark vereinfachte Draufsicht auf eine obere Begrenzung der Tankvorrichtung aus der Perspektive des Innenraums der Tankvorrichtung;
- Fig. 5: ein Ausschnitt der Tankvorrichtung gemäß Fig. 3 mit einer alternativen Ausführung einer Einrichtung zum Einleiten von Öl;
- Fig. 6: ein Ausschnitt der Tankvorrichtung gemäß Fig. 3 mit einer weiteren Bauform einer Einrichtung zum Einleiten von Öl, mittels der ein Ölstrahl auf eine Ablenkeinrichtung in den Innenraum der Tankvorrichtung einleitbar ist;
- Fig. 7: ein Ausschnitt der Tankvorrichtung gemäß Fig. 3, mit einer alternativ ausgeführten Ablenkeinrichtung;
- Fig. 8: ein Ausschnitt der Tankvorrichtung gemäß Fig. 3, mit einer weiteren alternativ ausgeführten Ablenkeinrichtung; und
- Fig. 9: eine vereinfachte Schnittdarstellung der Ablenkeinrichtung gemäß Fig. 8 in Alleinstellung.

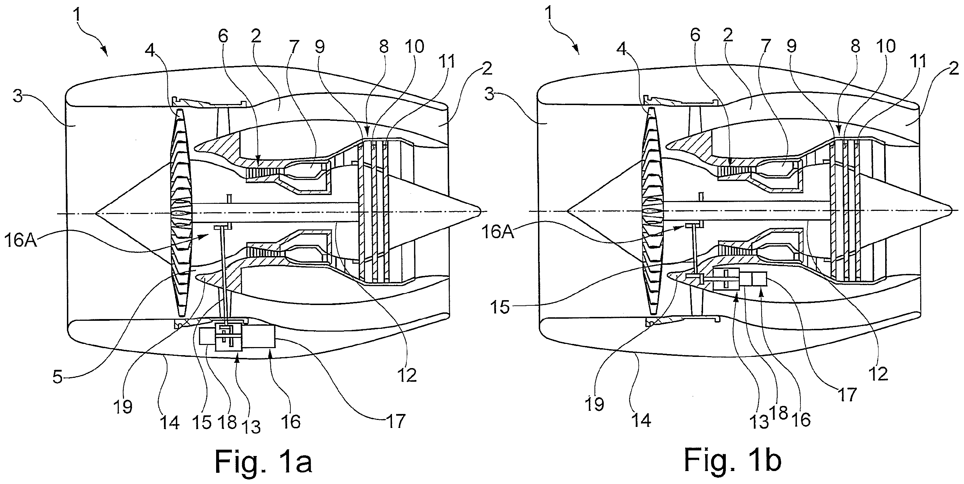

Ein Flugtriebwerk bzw. Strahltriebwerk 1 sind in Fig. 1a und Fig. 1b jeweils in einer Längsschnittansicht gezeigt. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist. Die Turbineneinrichtung 8 weist vorliegend drei Rotorvorrichtungen 9, 10 und 11 auf, welche in im Wesentlichen vergleichbarer Bauweise ausgebildet sind und mit einer Triebwerkswelle 12 verbunden sind.

Bei der Ausführung des Flugtriebwerks 1 gemäß Fig. 1a ist eine Nebenaggregategetriebeeinrichtung 13 in einem äußeren Triebwerksgehäuse 14 angeordnet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Strahltriebwerks 1 verlaufende Antriebswelle 15 über ein inneres Getriebe 16A mit der Triebwerkswelle 12 verbunden und wird somit von der Triebwerkswelle 12 im Betrieb des Strahltriebwerkes 1 angetrieben bzw. mit Drehmoment versorgt. Von der Nebenaggregategetriebeeinrichtung 13 werden verschiedene Nebenaggregate 16 und ein Ölabscheider 17, der auch als Breather bezeichnet wird, in gewünschtem Umfang mit Drehmoment beaufschlagt. Zusätzlich ist im Bereich der Nebenaggregategetriebeeinrichtung 13 auch eine Tankvorrichtung 18 eines Ölkreislaufs 20 des Flugtriebwerks 1 vorgesehen, die ein Hydraulikfluidreservoir darstellt, aus dem Öl zur Kühlung und Schmierung verschiedener Bereiche des Flugtriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Flugtriebwerkes 1, entnommen wird.

Im Unterschied hierzu ist die Nebenaggregategetriebeeinrichtung 13 mit den Nebenaggregaten 16, dem Ölabscheider 17 und der Tankvorrichtung 18 bei der Ausführung des Flugtriebwerks 1 gemäß Fig. 1b in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

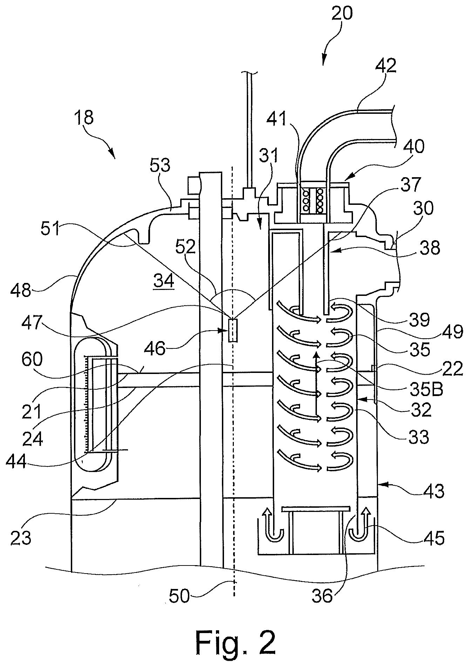

Ein bevorzugtes Ausführungsbeispiel der erfindungsgemäßen Tankvorrichtung 18 zeigt Fig. 2, wobei die Tankvorrichtung 18 mit einer Einlasseinrichtung 30 ausgeführt ist. Im Betrieb des Flugtriebwerks 1 entsteht in mit Öl beaufschlagten Bereichen, beispielsweise in Lagereinrichtungen, im Bereich von Zahnradpaarungen des inneren Getriebes 16A und der Nebenaggregategetriebeeinrichtung 13, ein Luft-Öl-Gemisch, welches der Tankvorrichtung 18 über die Einlasseinrichtung 30 als Luft-Öl-Volumenstrom zuführbar ist. Der Luft-Öl-Volumenstrom wird innerhalb einer einen Innenraum 31 der Tankvorrichtung 18 begrenzenden Wandung 43 einer hier als Zyklon ausgeführten Abscheideeinrichtung 32 zugeführt. Der Zyklon 32 weist dabei einen vorliegend im Wesentlichen zylindrischen Wandungsbereich 33 auf, über den der Zyklon 32 zumindest bereichsweise von einem Expansionsraum 34 der Tankvorrichtung 18 getrennt ist. Der Expansionsraum 34 befindet sich oberhalb eines aktuellen Ölstands 24 in der Tankvorrichtung 18, wobei ein maximaler Füllstand bzw. Ölstand der Tankvorrichtung 18 durch eine schematisch gezeigte Auslasseinrichtung 22 festgelegt und durch eine Linie 21 näher gezeigt ist. Ein sich im Betrieb des Flugtriebwerks 1 minimal einstellender Füllstand 23 ist in Fig. 2 ebenfalls ersichtlich.

Der Luft-Öl-Volumenstrom wird außermittig und tangential zu dem Wandungsbereich 33 in einem im Einbauzustand der Tankvorrichtung 18 oberen Bereich des Zyklons 32 in diesen eingeleitet. Ausgehend von der Einlasseinrichtung 30 strömt der Luft-Öl-Volumenstrom im Bereich des Zyklons 32 spiralförmig entsprechend des Pfeils 35 entlang des Wandungsbereichs 33 des Zyklons nach unten. Aufgrund der dabei wirkenden Zentrifugalkraft scheiden sich insbesondere große und schwere Öltropfen des Luft-Öl-Volumenstroms an dem Wandungsbereich 33 des Zyklons 32 ab und bilden dort einen Ölfilm. Der Ölfilm strömt aufgrund der Schwerkraft entlang des Wandungsbereichs 33 nach unten und fließt über eine Auslassöffnung 36 des Zyklons 32 in Richtung der Pfeile 45 in ein Ölreservoir der Tankvorrichtung 18 ab.

Durch die im Bereich des Zyklons 32 vorliegenden dynamischen Verhältnisse steigt im Bereich einer Mittelachse des Zyklons 32 in Richtung des Pfeils 35B ein Luft-Öl-Volumenstrom im Zyklon 32 auf. In diesem Luft-Öl-Volumenstrom werden insbesondere im Bereich des Zyklons 32 nicht abgeschiedene kleine Öltropfen sowie aus dem spiralförmig im Zyklon 32 nach unten strömenden Luft-Öl-Volumenstrom übergehende Öltropfen verschiedener Größen mitgeführt. Der in Richtung des Pfeils 35B in dem Zyklon 32 aufsteigende Luft-Öl-Volumenstrom wird vorliegend in einem oberen etwa auf Höhe der Einlasseinrichtung 30 liegenden Bereich einem von einer Wandung 37 begrenzten, vorliegend zylinderförmig ausgeführten Leitungsbereich 38 zugeführt. Auf einer einer Einlassöffnung 39 des Leitungsbereichs 38 abgewandten Seite des Leitungsbereichs 38 grenzt dieser im Bereich einer Auslasseinrichtung 40 der Tankvorrichtung 18 an eine vorliegend als federvorgespanntes Druckbegrenzungsventil 41 ausgeführte Ventileinrichtung, wobei ein Volumenstrom stromab des Druckbegrenzungsventils 41 einer Leitung 42 zugeführt wird, über die der aus der Tankvorrichtung 18 abgeführte Volumenstrom ggf. einer weiteren Abscheideeinrichtung zugeführt oder an eine Umgebung abgegeben werden kann.

Es ist weiterhin eine Einrichtung 46 zum Einleiten von Öl in den Innenraum 31 der Tankvorrichtung 18 vorgesehen. Die in Fig. 2 lediglich stark vereinfacht gezeigte Einrichtung 46 weist einen als Düse 47 ausgeführten Auslassbereich auf, wobei eine Mittelachse 44 der Einrichtung 46 im Auslassbereich 47 vorliegend ebenso wie seitliche Wandungsbereiche 48, 49 der hier mit einem im Wesentlichen kreisförmigen Querschnitt ausgeführten Tankvorrichtung 18 in der gezeigten Einbauposition der Tankvorrichtung 18 im Wesentlichen in vertikaler Richtung, d. h. parallel zu einer Mittelachse 50 der Tankvorrichtung 18, ausgerichtet ist. Die Mittelachse 44 der Einrichtung 46 ist zudem deckungsgleich zu der eine in Hochrichtung verlaufende Referenzachse darstellenden Mittelachse 50, d. h. je nach gewähltem Querschnitt der Tankvorrichtung 18 mittig angeordnet.

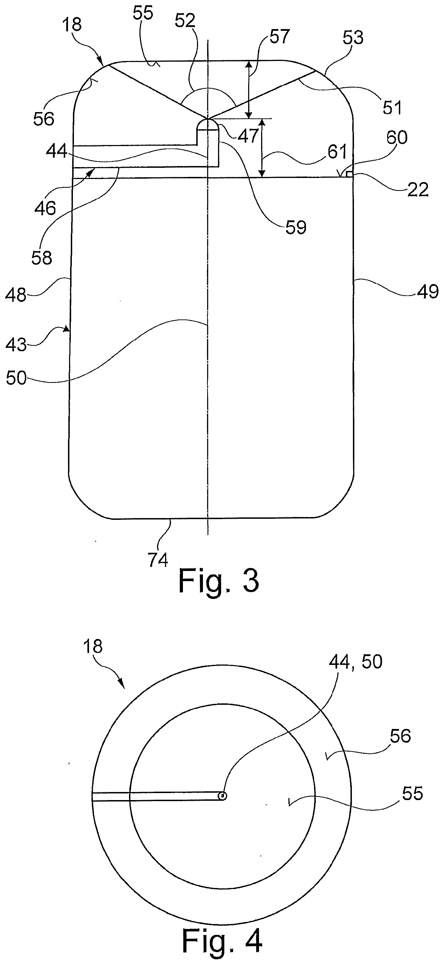

Die Düse 47 der Einrichtung 46 stellt ein Mittel zum Einleiten eines Ölsprühnebels in Form eines in Fig. 2 und Fig. 3 schematisiert dargestellten Ölsprühkegels 51 dar, wobei der Ölsprühkegel 51 durch einen Öffnungswinkel 52 von hier größer 90° gekennzeichnet ist. Bei der in Fig. 3 stark schematisiert dargestellten Tankvorrichtung 18 ist gezeigt, dass der Ölsprühnebel der Einrichtung 46 auf einen eine obere Begrenzung der Tankvorrichtung 18 darstellenden oberen Wandungsbereich 53 der Tankvorrichtung 18 gerichtet ist.

Mittels des aus der Einrichtung 46 durch den düsenartigen Auslassbereich 47 austretenden Öls ist vorliegend im Wesentlichen eine, in Fig. 4 näher gezeigte Fläche 55 des oberen Wandungsbereichs 53 insgesamt direkt mit Öl beaufschlagbar, wobei sich die Öltropfen der Einrichtung 46 mit einem sich im Betrieb auf dem oberen Wandungsbereich 53 bildenden Ölfilm vereinigen. Die Fläche 55 umfasst vorliegend etwa 80 % einer gesamten Fläche 56 des oberen Wandungsbereiches 53.

Die gesamte Fläche 56 des oberen Wandungsbereiches 53 ist hinsichtlich ihrer Größe vorliegend gleich einer senkrecht zu der Mittelachse 50 verlaufenden Querschnittsfläche 60 der Tankvorrichtung 18 auf Höhe der die maximale Füllstandshöhe definierenden Auslasseinrichtung 22. Die Fläche 56 wiederum ist durch eine Parallelprojektion der über die Einrichtung 46 mit Öl zu beaufschlagenden Oberfläche des oberen Wandungsbereichs 53 in Hochrichtung der Tankvorrichtung 18 in Einbaulage definiert.

Die im vorliegenden Fall etwa kreisförmigen Flächen 55 und 56 sind in Fig. 4 näher gezeigt, wobei die Fläche 56 die Fläche 55 vorliegend vollständig umfasst. Die Fläche 55 ergibt sich im vorliegenden Fall aus dem Tangens des halben Öffnungswinkels 52 des Ölsprühkegels 51 multipliziert mit einem Abstand 57 des Auslassbereichs 47 von dem oberen Wandungsbereich 53 zum Quadrat multipliziert mit Pi. Der Öffnungswinkel 52 des Ölsprühkegels 51 wird insbesondere in Abhängigkeit des Abstands 57 des Auslassbereichs 47 von dem oberen Wandungsbereich 53 gewählt, um vorliegend wenigstens 80 % der Fläche 56 direkt mit Öl zu beaufschlagen.

Um zu gewährleisten, dass die Einrichtung 46 in sämtlichen Betriebszuständen des Flugtriebwerks 1 bei positiver wirkender Gewichtskraft voll funktionsfähig ist, ist der Auslassbereich 47 der Einrichtung 46 oberhalb der die maximale Füllstandshöhe definierenden Querschnittsfläche 60 angeordnet und weist gegenüber der Querschnittsfläche 60 einen Abstand 61 größer Null auf.

Wie in Fig. 3 gezeigt ist, ist die Einrichtung 46 vorliegend fest mit dem seitlichen Wandungsbereich 48 der Tankvorrichtung 18 verbunden und weist einen sich ausgehend von dem seitlichen Wandungsbereich 48 in Richtung der Mittelachse 50 der Tankvorrichtung 18 erstreckenden und eine Ölzuführleitung darstellenden Leitungsbereich 58 auf, der hier im Wesentlichen senkrecht zu der Mittelachse 50 der Tankvorrichtung 18 ausgerichtet ist. Im Bereich der Mittelachse 50 schließt sich an den Leitungsbereich 58 ein weiterer Leitungsbereich 59 an, der im Wesentlichen konzentrisch zu der Mittelachse 50 der Tankvorrichtung 18 angeordnet ist, wobei die Mittelachse 44 des Auslassbereichs 47 vorliegend im Wesentlichen deckungsgleich zu der Mittelachse 50 der Tankvorrichtung 18 ist, d. h. ein Winkel zwischen der Mittelachse 50 der Tankvorrichtung und der Mittelachse 44 des Auslassbereichs 47 ist gleich Null.

Durch das von der Einrichtung 46 in Richtung des oberen Wandungsbereiches 53 gesprühte Öl bildet sich im Betrieb des Flugtriebwerks 1 im Bereich der Fläche 55 ein Ölfilm, der sich unter anderem aufgrund der Schwerkraft und der Strömungsdynamik insbesondere im Bereich der gesamten Fläche 56 verteilt und über die seitlichen Wandungsbereiche 48, 49 in Richtung des in der Tankvorrichtung 18 gelagerten Öls nach unten strömt, so dass mittels der Einrichtung 46 der Bereich der Wandung 43 der Tankvorrichtung 18 mit Öl beaufschlagbar ist, der oberhalb des sich im Betrieb des Flugtriebwerkes 1 einstellenden aktuellen Füllstandes 24, der in Hochrichtung zwischen dem minimalen Füllstand 23 und dem maximalen Füllstand 21 liegt, angeordnet ist. Zudem werden die nicht direkt von der Einrichtung 46 mit Öl beaufschlagten Wandungsbereiche des Expansionsraums 34 gegebenenfalls auch durch bei einem Aufprall auf dem oberen Wandungsbereich 53 abprallende Öltropfen mit Öl benetzt, so dass im Betrieb insbesondere sämtliche Wandungsbereiche des Expansionsraums 34 mit einem Ölfilm versehen sind.

Durch die Beaufschlagung der Wandungen 48, 49, 53 der Tankvorrichtung 18 im Betrieb des Flugtriebwerks 1 mit Öl werden diese Wandungen 48, 49, 53 gekühlt, so dass die Tankvorrichtung 18 hierdurch eine ausreichende Feuerfestigkeit aufweist. Entsprechend kann die vorliegend mit einer Aluminiumwandung 43 ausgeführte Tankvorrichtung 18 mit vorteilhaft geringen Wandstärken ausgeführt werden und weist somit vorteilhafterweise lediglich ein geringes Gewicht auf.

Im Folgenden werden weitere Ausführungsbeispiele mit alternativ ausgeführten Einrichtungen zum Einleiten von Öl in den Innenraum 31 der Tankvorrichtung 18 hinsichtlich ihrer Anordnung in dem Innenraum 31 und ihrer Funktionsweise näher beschrieben, wobei zur Vermeidung von Wiederholungen grundsätzlich auf die obige Beschreibung verwiesen wird.

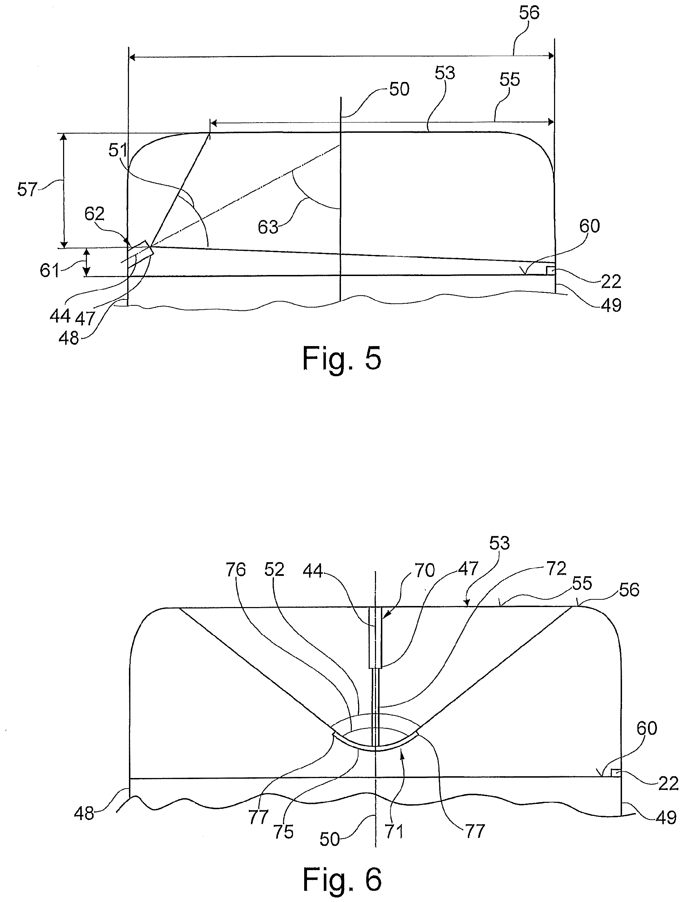

In Fig. 5 ist eine Einrichtung 62 zum Einsprühen von Öl dargestellt, deren als Düse 47 ausgeführter Auslassbereich in einem einem seitlichen Wandungsbereich 48 der Tankvorrichtung 18 nahen Bereich angeordnet ist. Die Mittelachse 44 des Auslassbereichs 47 ist hierbei um einen Winkel 63 von vorliegend etwa 60° gegenüber der Mittelachse 50 der Tankvorrichtung 18 bzw. einer in Einbauposition der Tankvorrichtung 18 vertikalen Achse geneigt. Mittels der Einrichtung 62 ist ein Ölsprühkegel 51 mit einem Öffnungswinkel 52 von vorliegend etwa 60° in den Innenraum 31 der Tankvorrichtung 18 einleitbar, wobei mittels des eingesprühten Öls insbesondere wenigstens 80 % der Fläche 56 des oberen Wandungsbereichs 53 direkt mit Öl beaufschlagbar ist. Mit der Einrichtung 62 ist somit neben einem Teil der Fläche 56 des oberen Wandungsbereiches 53 zusätzlich auch ein Teil eines seitlichen Wandungsbereiches 49 der Tankvorrichtung 18 direkt mit Öl beaufschlagbar, der dem seitlichen Wandungsbereich 48, an dem die Einrichtung 62 angeordnet ist, gegenüberliegt. Der Bereich der Tankvorrichtung 18, der dabei nicht direkt mit Öl beaufschlagt wird, wird durch die Kühlwirkung des Öls im Aufprallbereich ebenfalls zufriedenstellend gekühlt.

Ein weiteres Ausführungsbeispiel einer Einrichtung 70 zum Einleiten von Öl in den Innenraum 31 der Tankvorrichtung 18 ist in Fig. 6 gezeigt. Die Einrichtung 70 ist hierbei in einem bezüglich der Mittelachse 50 mittigen Bereich des oberen Wandungsbereichs 53 angeordnet, wobei eine Mittelachse 44 des Auslassbereichs 47 der Einrichtung 70 hier parallel und insbesondere deckungsgleich zu der Mittelachse 50 der Tankvorrichtung 18 angeordnet ist. Ein Winkel zwischen der Mittelachse 44 des Auslassbereichs 47 und der Mittelachse 50 der Tankvorrichtung 50 beträgt hierbei 180°. Die Einrichtung 70 ist hier zur Einleitung eines Ölstrahls 72 mit einem definierten Durchmesser 73 in den Innenraum 31 ausgeführt, wobei der Ölstrahl 72 in Richtung eines unteren Wandungsbereichs 74 nach unten in den Innenraum 31 der Tankvorrichtung 18 in Richtung einer Ablenkeinrichtung 71 einleitbar ist.

Die in Hochrichtung oberhalb des maximalen Füllstandes 21 der Tankvorrichtung 18 angeordnete Ablenkeinrichtung 71 ist vorliegend mit einem löffelförmigen Ablenkelement 75 bzw. einem Prallelement ausgeführt, wobei ein Randbereich 77 des Ablenkelements 75 durch einen Öffnungswinkel 76 gekennzeichnet ist. Im Betrieb der Einrichtung 70 trifft der Ölstrahl 72 insbesondere mittig auf die Ablenkeinrichtung 71 auf, und wird durch das Ablenkelement 75 der Ablenkeinrichtung 71 abgelenkt. Das im Bereich des Ablenkelements 75 abgelenkte Öl bildet dabei stromab des Ablenkelements 75 insbesondere einen kegelförmigen Ölfilm, der durch einen im Wesentlichen dem Öffnungswinkel 76 entsprechenden Winkel 52 gekennzeichnet ist. Mittels des über das Ablenkelement 75 abgelenkten Öls werden im Betrieb des Flugtriebwerks 1 vorliegend wenigstens 80 % der Fläche 56 des oberen Wandungsbereichs 53 mit Öl beaufschlagt.

Im Unterschied zu den Ausführungen gemäß Fig. 2 bis Fig. 5 wird der obere Wandungsbereich 53 der Tankvorrichtung 18 mittels der Einrichtung 70 indirekt mit Öl beaufschlagt.

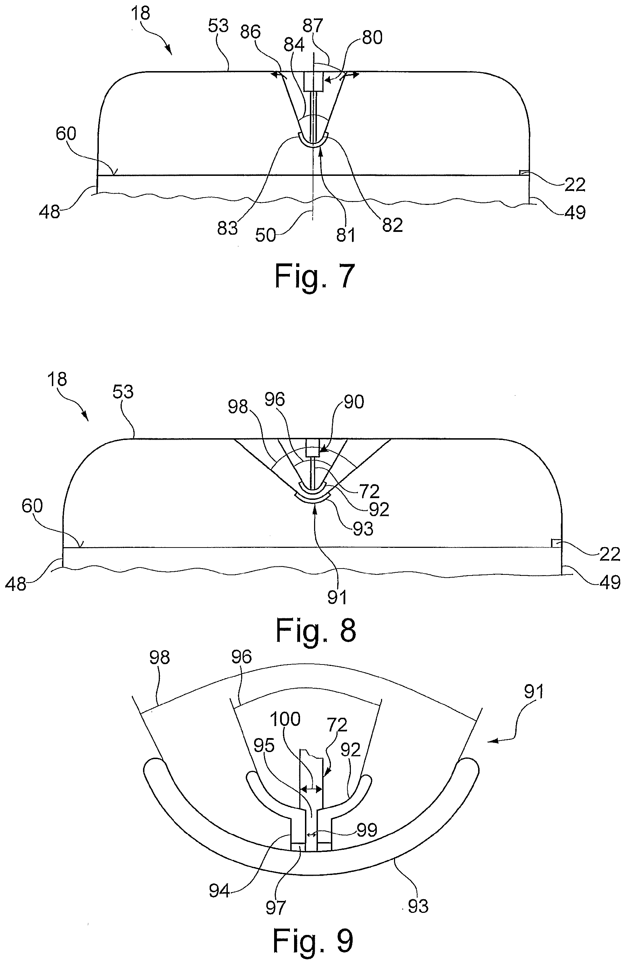

In Fig. 7 ist eine weitere Ausführungsform einer Einrichtung 80 zum Einleiten eines Ölstrahls 72 in den Innenraum 31 der Tankvorrichtung 18 gezeigt, die im Wesentlichen der Einrichtung 70 entspricht. Mittels der Einrichtung 80 ist wiederum ein Ölstrahl 72 in Richtung der Mittelachse 50 der Tankvorrichtung 18 nach unten auf eine Ablenkeinrichtung 81 richtbar. Im Unterschied zu dem Ablenkelement 75 der Ablenkeinrichtung 71 weist die Ablenkeinrichtung 81 ein Ablenkelement 82 auf, dessen Randbereich 83 einen Winkel 84 einschließt, der kleiner als der Winkel 76 der Ablenkeinrichtung 71 ist und vorliegend beispielsweise etwa 20° bis 30° beträgt. Eine Fläche 85 des oberen Wandungsbereichs 53, die von dem direkt auf den oberen Wandungsbereich 53 auftreffenden Öl eingeschlossen ist, beträgt dabei beispielsweise etwa 20 % der Fläche 56 des oberen Wandungsbereiches 53.

In den Bereichen, in denen das von der Ablenkeinrichtung 81 hier kegelförmig abgelenkte Öl auf den oberen Wandungsbereich 53 auftrifft, ist an dem oberen Wandungsbereich 53 vorliegend eine Umlenkeinrichtung 86 angeordnet. Die Umlenkeinrichtung 86 ist im gezeigten Ausführungsbeispiel im Wesentlichen rotationssymmetrisch zu der Mittelachse 50 der Tankvorrichtung 18 angeordnet, wobei die Umlenkeinrichtung 86, wie im Querschnitt gemäß Fig. 7 näher ersichtlich ist, blechartig ausgeführt ist. Der im Querschnitt plane, blechartige Abschnitt der Umlenkeinrichtung 86 weist gegenüber der Mittelachse 50 der Tankvorrichtung 18 bzw. einer Vertikalen einen Winkel 87 auf, der beispielsweise zwischen 30° und 50° beträgt. Der Winkel 87 ist dabei derart gewählt, dass das auf die Umlenkeinrichtung 86 auftreffende Öl durch die Umlenkeinrichtung 86 in gewünschtem Umfang auf die dem Innenraum 31 zugewandte Fläche 56 des oberen Wandungsbereichs 53 verteilt wird. Zur Führung des im Bereich der Umlenkeinrichtung 86 abgelenkten Öls können im Bereich des oberen Wandungsbereichs 53 Einkerbungen bzw. Rillen vorgesehen sein, die das Öl insbesondere radial zu der Mittelachse 50 der Tankvorrichtung 18 nach außen leiten.

Die Ausführung gemäß Fig. 7 ist dabei durch eine hohe Kühlleistung in Verbindung mit einem vergleichsweise hohen Ölbedarf gekennzeichnet.

Eine ausreichende Beaufschlagung der Fläche 56 mit Öl kann bei der Ausführung gemäß Fig. 7 gegebenenfalls auch ohne die Umlenkeinrichtung 86 erzielt werden, wenn im Betrieb des Flugtriebwerks 1 das von der Ablenkeinrichtung 81 auf den oberen Wandungsbereich 53 gerichtete Öl von diesem abprallt und durch das abprallende Öl ein ausreichend großer Bereich der Fläche 56 mit Öl beaufschlagt wird.

Eine weitere Ausführungsform einer Einrichtung 90 zum Einleiten eines Ölstrahls 72 in den Innenraum 31 der Tankvorrichtung 18 ist in Fig. 8 und Fig. 9 ersichtlich, wobei die Einrichtung 90 im Wesentlichen der Einrichtung 70 bzw. der Einrichtung 80 entspricht. Es ist wiederum eine Ablenkeinrichtung 91 vorgesehen, die vorliegend mit zwei Ablenkelementen 92, 93 ausgeführt ist, wobei ein erstes Ablenkelement 92 näher an dem Auslassbereich 47 der Einrichtung 90 als ein zweites Ablenkelement 93 angeordnet ist. Die Ablenkelemente 92, 93 sind im Wesentlichen rotationssymmetrisch zu einem sich im Betrieb der Einrichtung 90 ausbildenden Ölstrahl 72 bzw. zu der Mittelachse 50 der Tankvorrichtung 18 ausgeführt und vorliegend über einen rohrförmigen Abschnitt 94 miteinander verbunden. Das erste Ablenkelement 92 weist in einem mittigen Bereich eine kreisförmige Ausnehmung 95 auf, deren Durchmesser 99 vorliegend gleich groß wie ein Innendurchmesser des rohrförmigen Abschnitts 94 ist und hier einem halben Durchmesser 100 des Ölstrahls 72 entspricht, der sich im Betrieb der Einrichtung 90 ausbildet.

Im Betrieb der Einrichtung 90 wird somit ein bezüglich der Mittelachse 44 des Auslassbereichs 47 der Einrichtung 90 zentraler Teil des Ölstrahls 72 durch die Ausnehmung 94 des ersten Ablenkelements 92 in Richtung des zweiten Ablenkelements 93 geführt und von dem Ablenkelement 93 in oben näher beschriebener Weise derart ab- bzw. umgelenkt, dass Öl kegelförmig mit einem Öffnungswinkel 96 von beispielsweise 90° auf den oberen Wandungsbereich 53 gerichtet wird. Damit das im Bereich des zweiten Ablenkelements 93 abgelenkte Öl von dem rohrförmigen Abschnitt 94 nicht ungewünscht behindert wird, weist der rohrförmige Abschnitt 94 in einem an das zweite Ablenkelement 93 grenzenden Bereich wenigstens eine Durchflusspassage 96 für das Öl auf. Der Teil des Ölstrahls 72, der auf das erste Ablenkelement 92 trifft, wird von dem ersten Ablenkelement 92 derart abgelenkt, dass das Öl mit einem Öffnungswinkel 98, der kleiner als der Öffnungswinkel 96 ist, wiederum vorhangartig auf den oberen Wandungsbereich 53 abgelenkt wird.

In dem Bereich, in dem das von dem ersten Ablenkelement 92 abgelenkte Öl auf den oberen Wandungsbereich 53 trifft, kann hierbei eine Umlenkeinrichtung vergleichbar zu der Umlenkeinrichtung 86 angeordnet sein. Alternativ oder zusätzlich hierzu kann auch in dem Bereich, in dem das über das zweite Ablenkelement 93 abgelenkte Öl auf den oberen Wandungsbereich 53 trifft, eine Umlenkeinrichtung vergleichbar zu der Umlenkeinrichtung 86 vorgesehen sein.

### Bezugszeichenliste

- 1: Flugtriebwerk, Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerkswelle
- 13: Nebenaggregategetriebeeinrichtung
- 14: Triebwerksgehäuse
- 15: Antriebswelle
- 16: Nebenaggregate
- 16A: inneres Getriebe
- 17: Ölabscheider
- 18: Tankvorrichtung
- 20: Ölkreislauf
- 21: Linie; maximaler Füllstand
- 22: Auslasseinrichtung
- 23: minimaler Füllstand
- 30: Einlasseinrichtung
- 31: Innenraum der Tankvorrichtung
- 32: Abscheideeinrichtung, Zyklon
- 33: Wandungsbereich der Abscheideeinrichtung
- 34: Expansionsraum der Tankvorrichtung
- 35, 35B: Pfeil
- 36: Auslassöffnung des Zyklons
- 37: Wandung des Leitungsbereichs
- 38: Leitungsbereich
- 39: Einlassöffnung des Leitungsbereichs
- 40: Auslasseinrichtung der Tankvorrichtung
- 41: Ventileinrichtung, Druckbegrenzungsventil
- 42: Leitung
- 43: Wandung der Tankvorrichtung
- 44: Mittelachse des Auslassbereichs
- 45: Pfeile
- 46: Einrichtung zum Einleiten von Öl
- 47: Mittel; Auslassbereich der Einrichtung
- 48, 49: seitlicher Wandungsbereich der Tankvorrichtung
- 50: Mittelachse der Tankvorrichtung
- 51: Ölsprühkegel
- 52: Öffnungswinkel
- 53: oberer Wandungsbereich der Tankvorrichtung
- 55: Fläche
- 56: Fläche
- 57: Abstand
- 58: Leitungsbereich
- 59: weiterer Leitungsbereich
- 60: Querschnittsfläche
- 61: Abstand
- 62: Einrichtung zum Einleiten von Öl
- 63: Winkel
- 70: Einrichtung zum Einleiten von Öl
- 71: Ablenkeinrichtung
- 72: Ölstrahl
- 73: Durchmesser des Ölstrahls
- 74: unterer Wandungsbereich der Tankvorrichtung
- 75: Ablenkelement
- 76: Winkel
- 77: Randbereich des Ablenkelements
- 80: Einrichtung zum Einleiten von Öl
- 81: Ablenkeinrichtung
- 82: Ablenkelement
- 83: Randbereich des Ablenkelements
- 84: Winkel
- 86: Umlenkeinrichtung
- 87: Winkel
- 90: Einrichtung zum Einleiten von Öl
- 91: Ablenkeinrichtung
- 92: erstes Ablenkelement
- 93: zweites Ablenkelement
- 94: röhrenförmiger Abschnitt
- 95: Ausnehmung
- 96: Öffnungswinkel
- 97: Durchflusspassage
- 98: Öffnungswinkel
- 99: Durchmesser der Ausnehmung
- 100: Durchmesser des Ölstrahls

## Patentansprüche

1. Tankvorrichtung (18) eines Ölkreislaufs (20) eines Flugtriebwerks (1) zur Bevorratung von Öl in einem von einer Wandung (43) begrenzten Innenraum (31) mit wenigstens einer Einrichtung (46; 62; 70; 80; 90) zum Einleiten von Öl in den Innenraum (31), **dadurch gekennzeichnet, dass** mittels der Einrichtung (46; 62; 70; 80; 90) zum Einleiten von Öl der Bereich der Wandung (43) mit Öl beaufschlagbar ist, der oberhalb eines sich im Betrieb eines Flugtriebwerkes (1) einstellenden minimalen Füllstandes (23) angeordnet ist.

2. Tankvorrichtung nach Anspruch 1, **dadurch gekennzeichnet, dass** mittels der Einrichtung (46; 62; 70; 80; 90) zum Einleiten von Öl wenigstens 80 % einer dem Innenraum (31) zugewandten Fläche (56) eines Wandungsbereichs (53) der Wandung (43) direkt mit Öl beaufschlagbar ist, wobei der Wandungsbereich (53) im Einbauzustand der Tankvorrichtung (18) eine obere Begrenzung des Innenraums (31) bildet.

3. Tankvorrichtung nach Anspruch 1 oder 2, **dadurch gekennzeichnet, dass** die Einrichtung (46; 62) Mittel (47) zur Ausbildung eines Ölsprühkegels (51) aufweist.

4. Tankvorrichtung nach Anspruch 3, **dadurch gekennzeichnet, dass** die Einrichtung (46; 62) Mittel (47) zur Ausbildung eines einen Öffnungswinkel (52; 63) kleiner als 180° aufweisenden Ölsprühkegels (51) umfasst.

5. Tankvorrichtung nach einem der Ansprüche 1 bis 4, **dadurch gekennzeichnet, dass** die Einrichtung (70; 80; 90) Mittel (47) zur Ausbildung eines Ölstrahls (72) aufweist.

6. Tankvorrichtung nach einem der Ansprüche 1 bis 5, **dadurch gekennzeichnet, dass** eine Ablenkeinrichtung (71; 81; 91) vorgesehen ist, wobei die Einrichtung (46; 62; 70; 80; 90) dazu ausgeführt ist, im Betrieb Öl auf die Ablenkeinrichtung (71; 81; 91) zu richten.

7. Tankvorrichtung nach Anspruch 6, **dadurch gekennzeichnet, dass** die Ablenkeinrichtung (71; 81; 91) wenigstens ein zumindest bereichsweise löffelförmiges und/oder kegelförmiges Ablenkelement (75; 82; 92, 93) aufweist.

8. Tankvorrichtung nach einem der Ansprüche 6 oder 7, **dadurch gekennzeichnet, dass** die Ablenkeinrichtung (91) ein erstes, mit einer in einem mittigen Bereich angeordneten Öffnung (95) ausgeführtes Ablenkelement (92) und wenigstens ein zweites Ablenkelement (93) aufweist, wobei die Einrichtung (90) zur direkten Beaufschlagung des zweiten Ablenkelements (93) mit Öl durch die Öffnung (95) des ersten Ablenkelements (92) ausgeführt ist.

9. Tankvorrichtung nach einem der Ansprüche 1 bis 8, **dadurch gekennzeichnet, dass** im Bereich des die obere Begrenzung bildenden Wandungsbereichs (53) wenigstens eine Umlenkeinrichtung (86) zur Ablenkung des im Betrieb über die Einrichtung (46; 62; 70; 80; 90) auf den die obere Begrenzung bildenden Wandungsbereich (53) gerichteten Öls angeordnet ist.

10. Tankvorrichtung nach einem der Ansprüche 1 bis 9, **dadurch gekennzeichnet, dass** eine Auslasseinrichtung (22) vorgesehen ist, die eine maximale Füllstandshöhe der Tankvorrichtung (18) festlegt, wobei ein Auslassbereich (47) der Einrichtung (46; 62; 70; 80; 90) in Einbauposition der Tankvorrichtung (18) oberhalb der Auslasseinrichtung (22) angeordnet ist.

11. Tankvorrichtung nach einem der Ansprüche 1 bis 10, **dadurch gekennzeichnet, dass** eine Mittelachse (44) eines Auslassbereichs (22) der Einrichtung (46; 62; 70; 80; 90) gegenüber einer in Einbauposition der Tankvorrichtung (18) vertikal angeordneten Referenzachse einen Winkel (63) aufweist, der zwischen 0° und 180° liegt.

12. Tankvorrichtung nach einem der Ansprüche 1 bis 11, **dadurch gekennzeichnet, dass** ein Auslassbereich (22) der Einrichtung (46; 62; 70; 80; 90) bezüglich einer Querschnittsfläche (60) der Tankvorrichtung (18) im Bereich der Auslasseinrichtung (22) in einem mittigen Bereich der Tankvorrichtung (18) angeordnet ist.

13. Tankvorrichtung nach einem der Ansprüche 1 bis 11, **dadurch gekennzeichnet, dass** ein Auslassbereich (22) der Einrichtung (46; 62; 70; 80; 90) bezüglich einer Querschnittsfläche (60) der Tankvorrichtung (18) im Bereich der Auslasseinrichtung (22) in einem Randbereich der Tankvorrichtung (18) angeordnet ist.

14. Tankvorrichtung nach einem der Ansprüche 1 bis 13, **dadurch gekennzeichnet, dass** mehrere Einrichtungen (46; 62; 70; 80; 90) zum Einleiten von Öl in den Innenraum (31) der Tankvorrichtung (18) vorgesehen sind.

## Claims

1. Tank apparatus (18) of an oil circuit (20) of an aircraft engine (1), for storing oil in an internal space (31) bounded by a wall (43), having at least one device (46; 62; 70; 80; 90) for introducing oil into the internal space (31), **characterized in that**, by means of the device (46; 62; 70; 80; 90) for introducing oil, oil is able to be applied to that region of the wall (43) that is arranged above a minimum filling level (23) set during operation of an aircraft engine (1).

2. Tank apparatus according to Claim 1, **characterized in that**, by means of the device (46; 62; 70; 80; 90) for introducing oil, oil is able to be applied directly to at least 80% of an area (56), facing the internal space (31), of a wall region (53) of the wall (43), wherein the wall region (53) forms an upper boundary of the internal space (31) in the installed state of the tank apparatus (18).

3. Tank apparatus according to Claim 1 or 2, **characterized in that** the device (46; 62) has means (47) for forming an oil spray cone (51).

4. Tank apparatus according to Claim 3, **characterized in that** the device (46; 62) comprises means (47) for forming an oil spray cone (51) having an opening angle (52; 63) of less than 180°.

5. Tank apparatus according to one of Claims 1 to 4, **characterized in that** the device (70; 80; 90) has means (47) for forming an oil jet (72).

6. Tank apparatus according to one of Claims 1 to 5, **characterized in that** a deflection device (71; 81; 91) is provided, wherein the device (46; 62; 70; 80; 90) is embodied to direct oil into the deflection device (71; 81; 91) during operation.

7. Tank apparatus according to Claim 6, **characterized in that** the deflection device (71; 81; 91) has at least one at least regionally spoon-shaped and/or conical deflection element (75; 82; 92, 93).

8. Tank apparatus according to either of Claims 6 and 7, **characterized in that** the deflection device (91) has a first deflection element (92), embodied with an opening (95) arranged in a central region, and at least one second deflection element (93), wherein the device (90) is embodied for directly applying oil to the second deflection element (93) by the opening (95) of the first deflection element (92).

9. Tank apparatus according to one of Claims 1 to 8, **characterized in that**, in the region of the wall region (53) forming the upper boundary, at least one diverting device (86) for deflecting, during operation, the oil directed onto the wall region (53) forming the upper boundary via the device (46; 62; 70; 80; 90) is arranged.

10. Tank apparatus according to one of Claims 1 to 9, **characterized in that** an outlet device (22) is provided, which sets a maximum filling level of the tank apparatus (18), wherein an outlet region (47) of the device (46; 62; 70; 80; 90) is arranged above the outlet device (22) in the installed position of the tank apparatus (18).

11. Tank apparatus according to one of Claims 1 to 10, **characterized in that** a central axis (44) of an outlet region (22) of the device (46; 62; 70; 80; 90) is at an angle (63) of between 0° and 180° to a reference axis arranged vertically in the installed position of the tank apparatus (18).

12. Tank apparatus according to one of Claims 1 to 11, **characterized in that** an outlet region (22) of the device (46; 62; 70; 80; 90) is arranged in a central region of the tank apparatus (18) with regard to a cross-sectional area (60) of the tank apparatus (18) in the region of the outlet device (22).

13. Tank apparatus according to one of Claims 1 to 11, **characterized in that** an outlet region (22) of the device (46; 62; 70; 80; 90) is arranged in a peripheral region of the tank apparatus (18) with regard to a cross-sectional area (60) of the tank apparatus (18) in the region of the outlet device (22).

14. Tank apparatus according to one of Claims 1 to 13, **characterized in that** a plurality of devices (46; 62; 70; 80; 90) for introducing oil into the internal space (31) of the tank apparatus (18) are provided.

## Revendications

1. Dispositif de réservoir (18) d'un circuit d'huile (20) d'un moteur d'aéronef (1) pour le stockage d'huile dans un espace interne (31) limité par une paroi (43) avec au moins un dispositif (46 ; 62 ; 70 ; 80 ; 90) pour introduire de l'huile dans l'espace interne (31), **caractérisé en ce qu'**au moyen du dispositif (46 ; 62 ; 70 ; 80 ; 90) pour introduire de l'huile, la région de la paroi (43) peut être sollicitée avec de l'huile qui se trouve au-dessus d'un niveau de remplissage minimal (23) s'ajustant pendant le fonctionnement d'un moteur d'aéronef (1).

2. Dispositif de réservoir selon la revendication 1, **caractérisé en ce qu'**au moyen du dispositif (46 ; 62 ; 70 ; 80 ; 90) pour introduire de l'huile, au moins 80 % d'une surface (56) d'une région de paroi (53) de la paroi (43) tournée vers l'espace interne (31) peuvent être sollicités directement avec de l'huile, la région de paroi (53) formant, dans l'état installé du dispositif de réservoir (18), une limite supérieure de l'espace interne (31).

3. Dispositif de réservoir selon la revendication 1 ou 2, **caractérisé en ce que** le dispositif (46 ; 62) présente des moyens (47) pour réaliser un cône de pulvérisation d'huile (51).

4. Dispositif de réservoir selon la revendication 3, **caractérisé en ce que** le dispositif (46 ; 62) comprend des moyens (47) pour réaliser un cône de pulvérisation d'huile (51) présentant un angle d'ouverture (52 ; 63) inférieur à 180°.

5. Dispositif de réservoir selon l'une quelconque des revendications 1 à 4, **caractérisé en ce que** le dispositif (70 ; 80 ; 90) présente des moyens (47) pour réaliser un jet d'huile (72).

6. Dispositif de réservoir selon l'une quelconque des revendications 1 à 5, **caractérisé en ce qu'**un dispositif de déflection (71 ; 81 ; 91) est prévu, le dispositif (46 ; 62 ; 70 ; 80 ; 90) étant réalisé de manière à orienter l'huile vers le dispositif de déflection (71 ; 81 ; 91) pendant le fonctionnement.

7. Dispositif de réservoir selon la revendication 6, **caractérisé en ce que** le dispositif de déflection (71 ; 81 ; 91) présente au moins un élément de déflection (75 ; 82 ; 92, 93) au moins en partie en forme de louche et/ou de cône.

8. Dispositif de réservoir selon l'une quelconque des revendications 6 ou 7, **caractérisé en ce que** le dispositif de déflection (91) présente un premier élément de déflection (92) réalisé avec une ouverture (95) disposée dans une région centrale et au moins un deuxième élément de déflection (93), le dispositif (90) étant réalisé pour solliciter directement le deuxième élément de déflection (93) avec de l'huile à travers l'ouverture (95) du premier élément de déflection (92).

9. Dispositif de réservoir selon l'une quelconque des revendications 1 à 8, **caractérisé en ce que** dans la région de la région de paroi (53) formant la limite supérieure est disposé au moins un dispositif de déviation (86) pour dévier l'huile orientée par le biais du dispositif (46 ; 62 ; 70 ; 80 ; 90) vers la région de paroi (53) formant la limite supérieure pendant le fonctionnement.

10. Dispositif de réservoir selon l'une quelconque des revendications 1 à 9, **caractérisé en ce qu'**un dispositif d'écoulement (22) est prévu, lequel établit une hauteur de niveau de remplissage maximale du dispositif de réservoir (18), une région d'écoulement (47) du dispositif (46 ; 62 ; 70 ; 80 ; 90) étant disposée au-dessus du dispositif d'écoulement (22) dans la position d'installation du dispositif de réservoir (18).

11. Dispositif de réservoir selon l'une quelconque des revendications 1 à 10, **caractérisé en ce qu'**un axe médian (44) d'une région d'écoulement (22) du dispositif (46 ; 62 ; 70 ; 80 ; 90) présente, par rapport à un axe de référence disposé verticalement dans la position d'installation du dispositif de réservoir (18), un angle (63) qui est compris entre 0° et 180°.

12. Dispositif de réservoir selon l'une quelconque des revendications 1 à 11, **caractérisé en ce qu'**une région d'écoulement (22) du dispositif (46 ; 62 ; 70 ; 80 ; 90) est disposée, par rapport à une surface en section transversale (60) du dispositif de réservoir (18), dans la région du dispositif d'écoulement (22) dans une région centrale du dispositif de réservoir (18).

13. Dispositif de réservoir selon l'une quelconque des revendications 1 à 11, **caractérisé en ce qu'**une région d'écoulement (22) du dispositif (46 ; 62 ; 70 ; 80 ; 90) est disposée, par rapport à une surface en section transversale (60) du dispositif de réservoir (18), dans la région du dispositif d'écoulement (22) dans une région de bord du dispositif de réservoir (18).

14. Dispositif de réservoir selon l'une quelconque des revendications 1 à 13, **caractérisé en ce que** plusieurs dispositifs (46 ; 62 ; 70 ; 80 ; 90) sont prévus pour introduire de l'huile dans l'espace interne (31) du dispositif de réservoir (18).
